# EUROPÄISCHE PATENTSCHRIFT

(11) **EP 3 852 186 B1**
(45) Veröffentlichungstag und Bekanntmachung des Hinweises auf die Patenterteilung: **20.11.2024**
(21) Anmeldenummer: 21150636.5
(22) Anmeldetag: 08.01.2021
(51) Int. Cl.: H01M 50/105, H01M 50/119, H01M 50/178, H01M 50/184, H01M 50/533, H01M 50/534, H01M 50/548, H01M 50/553, H01M 10/04

(54) **VERFAHREN UND VORRICHTUNG ZUM VERBINDEN VON METALLVERBUNDFOLIEN FÜR POUCHZELLEN MIT EINEM VORSIEGELBAND**
METHOD AND DEVICE FOR CONNECTING METAL COMPOSITE FILMS FOR POUCH CELLS WITH A PRE-SEALING TAPE
PROCÉDÉ ET DISPOSITIF DE LIAISON DE FEUILLES COMPOSITES MÉTALLIQUES POUR CELLULES DE POCHE À L'AIDE D'UNE BANDE DE PRÉ-SCELLAGE

(30) Priorität: 17.01.2020 DE 102020101087
(43) Veröffentlichungstag der Anmeldung: 21.07.2021
(73) Patentinhaber: VOLKSWAGEN AG, 38440 Wolfsburg (DE)
(72) Erfinder: Grau, Frederik, 38124 Braunschweig (DE); Jamadar, Kartik, 38442 Wolfsburg (DE); Theuerkauf, Christian, 38114 Braunschweig (DE)
(74) Vertreter: Rössler, Matthias

(56) Entgegenhaltungen:
- DE-A1- 102010 050 046
- DE-A1- 102017 217 676
- JP-A- 2004 006 124

## Beschreibung

Die vorliegende Erfindung betrifft ein Verfahren und eine Vorrichtung zur Verbindung eines Vorsiegelbandes mit einer Metallverbundfolie für Pouchzellen.

Im Stand der Technik sind verschiedene Arten von Batterien mit Pouchzellen bekannt, die in der Regel als galvanische Zellen ausgebildet sind. Derartige Pouchzellen, die i.A. als Batteriezellen bezeichnet werden, werden beispielsweise zur Bereitstellung von elektrischer Energie für den Antrieb von Fahrzeugen verwendet. Eine andere Anwendung ist die Versorgung von mobilen Geräten wie beispielsweise Mobilfunkgeräten, Tabletts oder Laptops mit elektrischer Energie für deren Betrieb. Aufgrund der ständig steigenden Anforderungen an derartige Batterien und die darin verbauten Batteriezellen ist ein es ein fortwährendes Bestreben die Herstellungskosten zu senken, die Lebensdauer der Batterien zu verlängern und gleichzeitig die Leistungsdichte, d. h. die pro Volumeneinheit gespeicherte elektrische Energiemenge, zu erhöhen.

Die im Stand der Technik bekannten Pouchzellen bestehen grundsätzlich aus einer Anode, einer Kathode sowie einem dazwischen angeordneten Separator. Die Anode und die Kathode bilden die Elektroden der Pouchzellen. Der Separator dient dazu einen elektrischen Kontakt zwischen den beiden Elektroden zu verhindern. Weiterhin ist für die Funktion der Pouchzellen die Anwesenheit eines Elektrolyten erforderlich, der beide Elektroden benetzen bzw. durchsetzen muss. Die Elektroden selbst sind in der Regel aus mehreren Elektrodenbahnen aufgebaut, die ebenfalls durch Separatoren zueinander elektrisch isoliert werden.

Der in der Pouchzellen erzeugte Strom wird mittels sogenannter Ableiterfähnchen von den jeweiligen Elektrodenbahnen abgeleitet. Die Ableiterfähnchen sind dazu elektrisch leitend mit den jeweiligen Elektrodenbahnen verbunden und leiten den Strom von dort zu einem Ableitertab, mit dem sie dazu ebenfalls elektrisch leitend verbunden sind. Die genannten Komponenten werden anschließend mit einer Metallverbundfolie dicht umschlossen, wobei die Ableitertabs der jeweiligen Elektrode zumindest teilweise aus dieser Umhüllung herausragen und die Anschlusspole der Batterie bilden. Für ein zuverlässiges und dauerhaft dichtes Abschließen der Metallverbundfolie ist im Bereich der Ableitertabs ein sogenanntes Vorsiegelband vorgesehen, welches für einen dichten Abschluss zwischen dem Ableitertab und der Metallverbundfolie sorgt.

Bei den in der Praxis bekannten Lösungen erweisen sich die Vorsiegelbänder während der Ableiterschweißung als problematisch. Die Ableitertabs werden in der Regel durch Schweißen mit den Ableiterfähnchen der einzelnen Elektroden verbunden. Dies führt in der Regel zu einem Wärmeeintrag in dem Ableitertab, wodurch die temperaturempfindlichen Vorsiegelbänder beschädigt werden können. Um dies zu verhindern, ist es erforderlich die Ableitertabs und die Vorsiegelbänder während des Schweißprozesses ggf. sehr aufwendig und stetig zu kühlen. Alternativ wird der Abstand zwischen Schweißnaht und Vorsiegelband so gewählt, dass kein Wärmeintrag auf das Vorsiegelband einwirkt. In der Praxis kann der Abstand in der Regel allerdings nicht so groß ausfallen, da durch einen derart großen Abstand wertvoller Bauraum verloren geht. Das Vorsiegelband darf jedoch während der Fertigung weder beschädigt noch erwärmt werden, da es in einem späteren Prozessschritt eine stoffschlüssige Verbindung mit der Metallverbundfolie, die auch als Pouchfolie bezeichnet wird, eingehen muss. In der Praxis werden Ableitertabs in der Regel zusammen mit den zugehörigen Vorsiegelbänder als vorgefertigte einteilige Produkte beschafft.

Bedingt durch die vorgenannten Einschränkungen können derzeit auch nur bestimmte Schweißverfahren wie beispielsweise Punktschweißen, Widerstandsschweißen oder Linearschweißen (Laserschweißen) für die Fertigung der Ableitertabs verwendet werden. Die Verwendung von Flächenschweißen (auch Druckschweißen genannt) ist nicht möglich, da dies zu Beschädigungen der Vorsiegelbänder führen würde.

Die bislang bekannten Lösungen haben zudem weitere Nachteile. So muss der für die Verbindung der Ableiterfähnchen der Elektroden mit dem Ableitertab erforderliche Schweißprozess aufwendig und stetig gekühlt werden. Dabei muss sichergestellt werden, dass das Vorsiegelband nicht beschädigt bzw. erwärmt wird, um im weiteren Herstellungsprozess eine stoffschlüssige Verbindung mit der Metallverbundfolie zu gewährleisten. Ferner besteht der Nachteil, dass nur bestimmte Schweißverfahren verwendet werden können und so die elektrische Verbindung zwischen Ableiterfähnchen und dem Ableitertab einen relativ hohen elektrischen Widerstand aufweist. Außerdem muss während des Herstellungsprozesses zwischen dem Ableitertab und dem Vorsiegelband eine Transportsicherung vorgesehen werden, um ein unbeabsichtigtes Verlieren des Vorsiegelbandes zu verhindern.

Aus der DE 10 2010 050 046 A1 ist eine Zelle mit einem Elektrodenstapel und einer Umhüllung bekannt. Die Umhüllung weist eine Durchtrittsstelle für einen Ableiter auf, die durch eine Schutzeinrichtung gegenüber der Umgebung abgedichtet ist.

Die JP 2004-6124 A ist auf eine Batterie gerichtet, deren Umhüllung aus zwei verschiedenen, elektrisch leitenden Blechen gebildet wird. Die Bleche sind elektrisch voneinander isoliert. Die Bleche werden als Ableiter genutzt, so dass eine Durchführung eines Ableiters durch die Umhüllung nicht erforderlich ist.

Die DE 10 2017 217 676 A1 ist auf eine Batteriezelle und ein Verfahren zur Herstellung einer Batteriezelle gerichtet. Dabei wird ein Bereich des Stromableiters z. B. aufgeraut, wobei dieser Bereich in dem Durchtrittsbereich des Stromableiters durch das Gehäuse angeordnet ist und mit dem Gehäuse der Zelle verbunden wird.

Aufgabe der vorliegenden Erfindung ist es daher, die sich aus dem Stand der Technik ergebenden Probleme zumindest teilweise zu lösen. Insbesondere soll ein Verfahren zur Verarbeitung einer Metallverbundfolie für Pouchzellen angegeben werden, das den Fertigungsprozess vereinfacht und die elektrischen Eigenschaften der Pouchzellen und damit der gesamten Batterie verbessert.

Zur Lösung dieser Aufgaben trägt ein Verfahren mit den Merkmalen gemäß Patentanspruch 1 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Vorliegend wird ein Verfahren zur Verbindung eines Vorsiegelbandes mit einer Metallverbundfolie für Pouchzellen vorgeschlagen, welches wenigsten die folgenden Schritte aufweist:
a) Erzeugen einer Textur in wenigstens einem Teilbereich der Metallverbundfolie;
b) Aufbringen eines Vorsiegelbandes auf die Metallverbundfolie, wobei die Textur zumindest teilweise von dem Vorsiegelband überdeckt wird;
c) Verbinden des Vorsiegelbandes mit der Metallverbundfolie zu einem Verbund;
d) Zuschneiden des Verbunds auf eine vordefinierte Fertigkontur,
wobei die Metallverbundfolie (2) vor dem Schritt a) in eine Formvorrichtung (7) mit einer Aussparung (10) eingelegt wird;wobei die Textur auf der Metallverbundfolie (2) im Schritt a) durch einen Einsatz im Blechhalter (9) in der Formvorrichtung (7) erzeugt wird.

Im Schritt a) wird zunächst in wenigstens einem Teilbereich der Metallverbundfolie eine Textur erzeugt. Eine Textur kann als eine regelmäßige oder unregelmäßige Erhöhung oder Vertiefung an der Oberfläche der Metallverbundfolie ausgebildet werden. Die Textur kann als einzelne Erhöhung oder Vertiefung oder durch eine Vielzahl von Erhöhungen oder Vertiefungen ausgebildet werden. Die Textur kann beispielsweise nach Art eines Musters ausgeführt sein. Beispielsweise kann die Textur in verschiedene Richtungen regelmäßige Erhöhungen und Vertiefungen aufweisen. Die Vertiefung können sich dabei auch durch eine gesamte Wandstärke der Metallverbundfolie hindurch erstrecken, sodass die Metallverbundfolie an diesen Stellen durchbrochen ist. Texturen können durch Verprägungen erzeugt werden, wie beispielsweise punktförmige Erhöhungen bzw. Vertiefungen oder linienförmige Rippen oder Vertiefungen. Texturen können insbesondere auch in Form sich wiederholender Muster, wie beispielsweise sich kreuzender Linien, ausgeführt werden. Die Texturen werden dabei bevorzugt mit einem Werkzeug, insbesondere einem Einsatz, eingeprägt.

Gemäß Schritt b) wird das Vorsiegelband auf die Metallverbundfolie aufgebracht, wobei es den mit der Textur versehenen Bereich der Metallverbundfolie zumindest teilweise überdeckt. Schritt b) kann insbesondere nach Abschluss des Schrittes a) durchgeführt werden. Es ist beispielsweise möglich, dass das Vorsiegelband in Schritt b) auf der Metallverbundfolie (automatisch) an einer vorgegebenen Stelle platziert wird.

Schritt c) dient dazu, das Vorsiegelband mit der Metallverbundfolie zu einem Verbund zu verbinden und anschließend in Schritt d) auf die benötigte und vordefinierte Kontur zuzuschneiden

Während des Verbindungsprozesses werden Vorsiegelband und Metallverbundfolie zueinander fixiert und dann das Verbinden mit oder ohne Fügemittel bevorzugt unter Raumtemperatur durchgeführt. Hierbei wird im Bereich der Textur bevorzugt durch Druck eine Adhäsion und/oder ein Formschluss zwischen der Metallverbundfolie und dem Vorsiegelband erzeugt.

Das Zuschneiden gemäß Schritt d) erfolgt in einem Trennschritt insbesondere mittels eines trennenden Verfahrens, bei dem der Randbereich der Metallverbundfolie maßgenau beschnitten wird. Hierbei ist es insbesondere möglich die Schritte c) und d) kombiniert in einem gemeinsamen Verfahrensschritt auszuführen.

Auf diese Weise kann der Prozessschritt der Verbindung der Metallverbundfolie mit dem Vorsiegelband gemeinsam mit dem Trennschnitt der Folie erfolgen. Der Trennschnitt ist aufgrund der durch die Umformung entstehenden unstetigen Ränder der Folie notwendig. Ferner wird durch den Trennschnitt das spätere Zielmaß der Pouchfolie erreicht. Durch die gemeinsame Ausführung der Verbindung und des Trennschnitts erhöht sich die Wirtschaftlichkeit des Herstellungsprozesses erheblich.

Die so hergestellte Metallverbundfolie kann danach in besonders einfacher Weise für den Herstellungsprozess einer Pouchzelle bzw. einer Batterie bestehend aus mehreren Pouchzellen verwendet werden. Dies liegt daran, dass das Vorsiegelband sicher an der Metallverbundfolie angeordnet ist und nicht wie bisher am Ableitertab. Dies hat gleich mehrere Vorteile. Zum einen entfällt damit die Wärmeempfindlichkeit des Ableitertabs zum Beispiel während des Schweißens und es können auch andere besonders vorteilhafte Schweißverfahren, wie das Druckschweißen verwendet werden, wodurch der ohmsche Widerstand der Pouchzelle reduziert werden kann.

Der Vorteil des Druckschweißens besteht darin, dass auf diesem Wege elektrische Verbindungen geschaffen werden können, die einen wesentlich kleineren elektrischen Widerstand aufweisen. Die zu leitenden Elektronen müssen damit nicht mehr ihren Weg von einem Bauteil zum anderen über kleine Verbringungen nehmen, sondern können die gesamte Kontaktfläche zwischen dem Bauteil nutzen, wodurch der ohmsche Leistungsverlust signifikant verringert wird und sich die Pouchzellen bei Energieabgabe oder Energieaufnahme deutlich weniger erwärmen.

Ein anderer Vorteil der Anordnung des Vorsiegelbandes auf der Metallverbundfolie besteht darin, dass die Ableitertabs während des Schweißprozesses nicht mehr ständig gekühlt werden müssen. Hierdurch vereinfacht sich der Fertigungsprozess erheblich. Weiterhin können auch die bislang erforderlichen Transportsicherungen zur Positionierung der Vorsiegelbänder mit den Ableitertabs entfallen, weil das Vorsiegelband nun sicher mit der Metallverbundfolie verbunden ist und so einfach und verliersicher dem Herstellungsprozess zugeführt werden kann. So war beispielsweise bislang erforderlich das Vorsiegelband durch einen Kleber oder mittels eines Schweißverfahrens an dem Ableitertab zu sichern. Dieser Arbeitsschritt kann durch die hier vorgeschlagene Lösung entfallen und es wird ermöglicht, einen weiteren Werkstoff bzw. ein weiteres Fügemittel, wie beispielsweise ein Kleber, zu vermeiden.

Schließlich müssen nun nicht mehr die Ableitertab zusammen mit den Vorsiegelbänder vorkonfektioniert beschafft werden, wodurch sich zudem die Beschaffungskosten reduzieren lassen.

Insbesondere kann vorgesehen werden, dass das Verbinden des Vorsiegelbandes mit der Metallverbundfolie mittels Adhäsion und/oder Formschluss durch die vorher aufgebrachte Textur durchgeführt wird. Dazu wird das Vorsiegelband gegen die Textur gepresst, so dass das eine zuverlässige Verbindung zwischen diesen beiden Bauteilen entsteht. Unter Adhäsion ist dabei die Erzeugung von Haftkräften zwischen dem Vorsiegelband und der Metallverbundfolie zu verstehen. Dies kann beispielsweise durch Verpressen der beiden Bauteile unter Druck geschehen. Alternativ können auch Hilfsstoffe eingesetzt werden, die nach Art eines Klebstoffes für die Adhäsion zwischen den Bauteilen sorgen.

Ein Vorteil der vorliegenden Erfindung besteht darin, dass die Verbindung der Metallverbundfolie mit dem Vorsiegelband in den zwei nachfolgenden Prozessschritten Tiefziehen und Trennschnitt integriert durchgeführt werden kann. Hierbei kann der Vorteil der Vereinfachung des Herstellerprozesses realisiert werden.

Die Metallverbundfolie wird vor dem Erzeugen der Textur an der Oberfläche der Metallverbundfolie in eine Formvorrichtung mit einer Aussparung eingelegt.

Dazu kann die Metallverbundfolie beispielsweise auf eine Matrize aufgelegt werden, wobei die Matrize eine solche Aussparung aufweist, die der Form entspricht, die die fertige Metallverbundfolie bzw. Pouchfolie später aufweisen soll. Die Metallverbundfolie kann dabei von einem Blechhalter sicher in der Matrize fixiert werden, um einen sicheren Halt während der Bearbeitung sicherzustellen. Der Blechhalter funktioniert dabei im eigentlichen Sinne als Folienhalter bzw. Niederhalter für die zu bearbeitende Pouchfolie.

Die Textur auf der Metallverbundfolie im Schritt a) wird durch einen Einsatz im Blechhalter in der Formvorrichtung erzeugt. Hierzu schließt ein im Blechhalter oder ein separat vorgesehener Einsatz kurz vor dem bzw. am Ende des Umformprozesses, um die gewünschte Textur in der Metallverbundfolie zu erzeugen. Das Erzeugen der Textur kann gleichzeitig während des Trennvorgangs oder danach durchgeführt werden. Zur Fixierung der Metallverbundfolie kann beispielsweise der Blechhalter, der ein Bestandteil der Formvorrichtung ist, verwendet werden. Dies geschieht, indem die Metallverbundfolie zunächst auf die Matrize aufgelegt wird. Danach wird der Blechhalter in Richtung der Matrize verfahren und presst dabei die Metallverbundfolie gegen die Matrize.

Insbesondere vorteilhaft ist es, wenn der Schritt der Erzeugung der Textur vor dem Schritt a) oder zumindest kurz vor Ende des Tiefziehprozesses ausgeführt wird. Kurz vor dem Ende bedeutet dabei, dass der Umformprozess bereits zu mehr als 80%, vorzugsweise zu mehr als 90% abgeschlossen ist und keine größeren Veränderungen im Randbereich der Metallverbundfolie mehr zu erwarten sind. Auf diese Weise kann die Textur bereits am Ende der Umformung oder kurz danach auf die Metallverbundfolie eingebracht werden. Der Materialfluss unter dem Blechhalter während des Tiefziehens wird durch diesen Prozess nicht beeinflusst. Dies kann beispielsweise durch einfache Einsätze erreicht werden, die im Blechhalter vorgesehen sind und Blechhalter kurz vor Ende der Umformung über separate Gasdruckfedern auf die Oberfläche der Metallverbundfolie einwirken, um so eine gewünschte Textur zu erzeugen.

Für die Umsetzung des Umformvorgangs, der insbesondere als Tiefziehvorgang mit Stempel und Matrize ausgestaltet sein kann, stehen unterschiedliche bekannte Verfahren und Methoden, die beispielsweise einen Stempel und eine komplementär geformte Matrize verwenden, zur Verfügung.

Insbesondere kann die Metallverbundfolie in einem Verfahrensschritt innerhalb einer Kavität umgeformt werden. Dieser Verfahrensschritt kann grundsätzlich vor, während oder nach den Verfahrensschritten a) bis d) erfolgen. Die Durchführung der Umformung kann in Abhängigkeit von der Art des gewählten Tiefziehprozesses erfolgen. So kann der Tiefziehvorgang beispielsweise mittels eines Stempels, mittels elektromagnetischer Impulsumformung und/oder mittels Druckluft erfolgen. Ein Vorteil der vorliegenden Erfindung besteht darin, dass der Tiefziehvorgang und die Schritte a) bis d) in einem Verfahrensablauf integriert ausgeführt werden können, ohne örtlich umpositioniert werden zu müssen.

Besonders vorteilhaft ist es, wenn als Metallverbundfolie eine Aluminium-Verbundfolie verwendet wird. Derartige Folien sind gut verfügbar und haben sich für die Ummantelung von Pouchzellen bereits bewährt. Die Folien bestehen in der Regel aus verschiedenen Kunststoffschichten, wobei die Basis eine ca. 40µm dicke Aluminiumfolie ist. Die Aluminiumfolie ist auf beiden Seiten von verschiedenen Kunststoffschichten ummantelt, die für die Umformung, Isolierung und spätere stoffschlüssige Verbindung notwendig sind. Somit ergeben sich Foliendicken zwischen ca. 120µm und 180µm [Mikrometer], die je nach Hersteller und Anforderung variieren können.

Insbesondere kann mit wenigstens einer Metallverbundfolie der hier vorgeschlagenen Art, einem Zellstapel, einem Ableitertab und einem Ableiterfähnchen auch ein Verfahren zu Herstellung einer Pouchzelle mit folgenden Schritten durchgeführt werden:
A) Verbinden des Ableitertabs mit dem Ableiterfähnchen,
B) Zusammenführen des Ableitertabs mit dem Zellstapel;
C) Umhüllen des Zellstapels und des Ableitertabs mit wenigstens einer Metallverbundfolie;
D) Versiegeln der Metallverbundfolie.

Durch die Einbringung des Vorsiegelbandes auf die Pouchfolie und die somit bessere Möglichkeit der Schweißung von Ableitertabs und Ableiterfähnchen des Zellstapels wird die Herstellung von Pouchzellen erleichtert. Damit wiederum wird auch die Fertigung von Pouchzellen in erheblichem Maß verbessert. Durch die Einhaltung der beschriebenen Prozessreihenfolge kann eine Metallverbundfolie mit einer sehr präzisen Randkontur hergestellt werden. Zudem können die Vorsiegelbänder besonders genau auf der Metallverbundfolie positioniert werden. Diese erhöhte Fertigungsgenauigkeit wirkt sich vorteilhaft auf den nachfolgenden Fertigungsschritt zur Herstellung der Pouchzellen aus. Durch die präzise gefertigte Metallverbundfolie ist in diesem späteren Schritt die Genauigkeit der Positionierung von der Pouchfolie inkl. Vorsiegelband zu dem Ableitertab gewährleistet. Außerdem ist der zusätzliche Prozessschritt der Positionierung und Transportsicherung des Vorsiegelbandes zu dem Ableitertab nicht länger notwendig.

Die nach diesem Verfahren gestaltete Pouchzelle kann in besonders einfacher Weise ohne zusätzliche Kühlung der Ableiter während des Verbindens mit den Ableiterfähnchen hergestellt werden. Zudem können die zur Umhüllung des Zellstapels verwendeten Metallverbundfolien im Schritt C) besonders einfach und zuverlässig versiegelt werden, da die Vorsiegelbänder bereits sicher an der Metallverbundfolie angeordnet sind. Weitergehende Transportsicherungen zur Sicherung der Vorsiegelbänder an den Ableitertabs werden nicht mehr benötigt. Die Verwendung der hier vorgeschlagenen Metallverbundfolie bei der Herstellung von Pouchzellen erleichtert somit in erheblichem Maß die Fertigung dieser Zellen.

Besonders bevorzugte Ausführungsformen von Pouchzellen sehen dabei die Verwendung von zwei Metallverbundfolien vor, die zuvor mittels eines Tiefziehvorgangs in die benötigte Form gebracht wurden. Die beiden Metallverbundfolie umhüllenden dann einen Zellstapel. Der in diesem Zellstapel erzeugte Strom wird dann mittels einer Vielzahl von Ableiterfähnchen und über zwei Ableitertabs an einen Verbraucher abgegeben. Die Ableiterfähnchen sind dabei je nach Polung mit einem der beiden Ableitertabs elektrisch verbunden, sodass alle mit einer Kathode verbundenen Ableiterfähnchen an einem ersten Ableitertab und alle mit einer Anode verbundenen Ableiterfähnchen an einem zweiten Ableitertab angeschlossen sind.

Zur Lösung der Aufgabenstellung wird weiterhin ein Vorrichtung zur Herstellung von Metallverbundfolien für Pouchzellen mit einer Matrize vorgeschlagen, die dadurch gekennzeichnet ist, dass die Matrize zu der vorgeformten Metallverbundfolie komplementär ausgebildet ist, eine Zuführvorrichtung zur Zuführung von Vorsiegelband zur Matrize und ein Anschlagmittel zur Positionierung des Vorsiegelbands auf der Matrize aufweist, ferner ein Blechhalter, der zum Verbinden des Vorsiegelbands mit der Metallverbundfolie ausgebildet ist, und ein Schneidwerkzeug zum Beschneiden der Metallverbundfolie. vorgesehen sind. Mit einer derart gestalteten Vorrichtung können vorgeformte Metallverbundfolien, die beispielsweise zuvor mittels eines Tiefziehvorgangs in eine gewünschte halbschalenförmige Form gebracht worden sind, mit dem Vorsiegelband verliersicher verbunden und maßgenau zugeschnitten werden. Hierbei können die Schritte der Zuführung des Vorsiegelbands, des Verbindens von Vorsiegelband mit der Metallverbundfolie und des Zuschnitts an einer Fertigungsstation ausgeführt werden. Dies steigert die Effizienz der Fertigung erheblich, da zwischen diesen Schritten kein Weitertransport erforderlich ist. Vorzugsweise werden die Schritte auch automatisiert ausgeführt. Hierzu kann das Magazin eine Mehrzahl von Vorsiegelbändern bereithalten, die von einer Fördereinrichtung zur Matrize gefördert werden. Dort gelangen die Vorsiegelbänder zur Anlage an Anschlagmittel, die beispielsweise als federnd gelagerte bewegliche Bolzen im Blechhalter ausgeführt sind, und werden so genau Positionierung über der Metallverbundfolie positioniert. Nach der Zuführung und der Positionierung erfolgt dann das Verbinden von Vorsiegelband und Metallverbundfolie. Dies kann beispielsweise durch Aufschweissen mittels das Blechhalters erfolgen. Der Blechhalter kann dazu die entsprechend große Anpresskraft auf den Verbund von Vorsiegelband und Metallverbundfolie ausüben und/oder für einen ausreichend hohen Temperatureintrag in den Verbund sorgen. Schließlich wird der Verbund noch in die gewünschte Form gebracht, in dem vorzugsweise die umlaufende Aussenkante mittels des Schneidwerkzeugs formgenau und maßgenau zugeschnitten wird.

Vorzugsweise ist dabei das Schneidwerkzeug in den Blechhalter integriert. Hierdurch kann die Vorrichtung kompakter gebaut werden. Zudem kann bei dieser Ausgestaltung der Schritt des Verbindens gleichzeitig mit dem Zuschnitt der Außenkontur im Trennschritt ausgeführt werden.

Insbesondere ist dabei vorteilhafterweise das Anschlagmittel in den Blechhalter integriert. Hierdurch ist es beispielsweise möglich die Positionierung des Vorsiegelbands bei geöffnetem Blechhalter vorzunehmen und beim Schließen des Blechhalters gleichzeitig das Verbinden und den Zuschnitt auszuführen.

Schließlich können derartige Pouchzellen vorteilhaft in Kraftfahrzeugen eingesetzt werden, da sie günstig in der Herstellung sind und zudem aufgrund des verbesserten und reduzierten ohmschen Widerstands bessere elektrische Eigenschaften aufweisen. Die bestehen beispielsweise darin, dass sich die Pouchzellen während des Betriebes nicht oder zumindest deutlich weniger erwärmen und eine höhere Leistungsabgabe erbringen können.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
Fig.1: einen Ableitertab mit Metallverbundfolie und Vorsiegelband nach dem Stand der Technik;
Fig. 2: eine tiefgezogene Metallverbundfolie mit Textur;
Fig. 3: eine tiefgezogene Metallverbundfolie mit Textur und Vorsiegelband;
Fig. 4: eine seitliche Schnittansicht einer erfindungsgemäßen Formvorrichtung während des Tiefziehens;
Fig. 5: eine seitliche Schnittansicht einer erfindungsgemäßen Formvorrichtung während des Aufbringens des Vorsiegelbandes; und
Fig. 6: ein Kraftfahrzeug mit Pouchzellen gemäß der vorliegenden Erfindung;

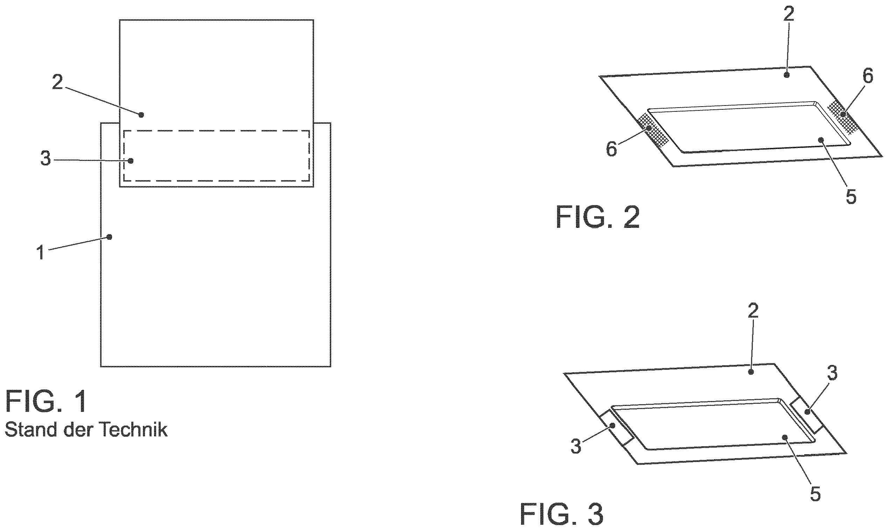

In Figur 1 ist ein Ableitertab 1 mit einer Metallverbundfolie 2 (Pouch) und einem Vorsiegelband 3 dargestellt. Der Ableitertab 1 besteht aus einem elektrisch leitenden Metall, wie beispielsweise Aluminium, Kupfer oder Stahl und dient im fertig montierten Zustand als Kontakt einer in dieser Ansicht nicht gezeigten Pouchzelle 4. Die Metallverbundfolie 2 besteht aus einer sehr dünnen Metallschicht, die auf einer Trägerschicht aufgebracht ist. Die Trägerschicht kann beispielsweise aus einem Kunststoff wie etwa Polypropylen oder Polyethylen bestehen. Im fertig montierten Zustand muss gemäß dem Stand der Technik die Kunststoffseite der Metallverbundfolie 2 mit dem Ableitertab 1 verbunden werden, wobei zwischen beiden Bauteilen das Vorsiegelband 3 angeordnet wird, um ein dauerhaft dichtes Abschließen der Pouchzellen 4 nach außen zu gewährleisten. Dies ist erforderlich, um ein Austreten von Elektrolyt oder ein Eindringen von Fremdstoffen in die Pouchzellen 4 zu verhindern. Die für die Funktion der Pouchzellen 4 ebenfalls erforderlichen Ableiterfähnchen müssen danach noch mit dem Ableitertab 1 verbunden werden, um die Funktionsfähigkeit der Pouchzellen 4 zu erreichen. Nach dem Stand der Technik erfolgt dies mittels Versschweißung, wobei der Ableitertab 1 fortlaufend gekühlt werden muss, da andernfalls ein Wärmeeintrag in das Vorsiegelband 3 erfolgen und zu einer Beschädigung desselbigen führen würde. Die Herstellung von Pouchzellen nach dem Stand der Technik ist somit sehr umständlich und fehleranfällig.

In Figur 2 ist eine Metallverbundfolie 2 in einer Schrägansicht dargestellt. Die Metallverbundfolie 2 hat bereits einen Tiefziehprozess durchlaufen und weist eine Kavität 5 zur Aufnahme eines nicht dargestellten Zellstapels auf. Rechts und links der Kavität 5 befinden sich zwei Bereiche 6 in denen eine Textur in die Oberfläche der Metallverbundfolie 2 eingebracht worden ist. Der Vorgang der Einbringung der Textur wird nachfolgend noch näher erläutert.

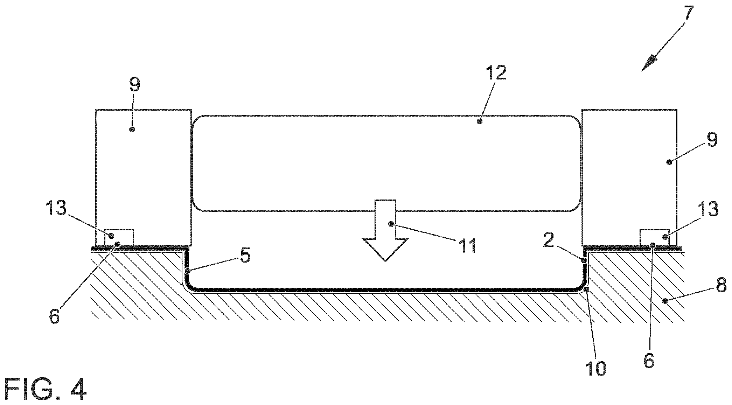

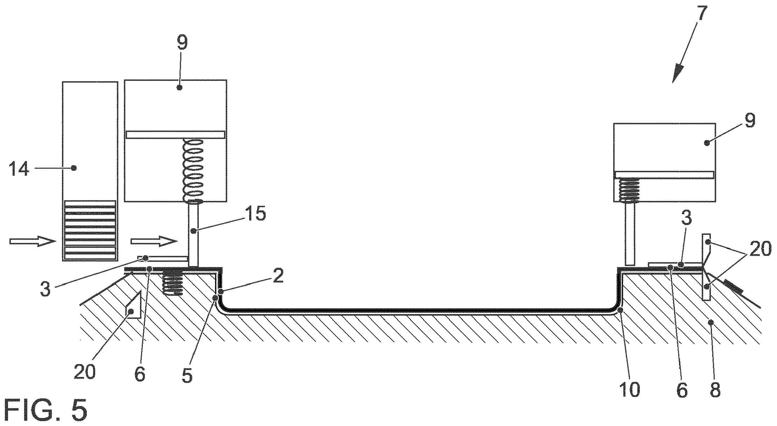

In Figur 3 ist die Metallverbundfolie 2 nach Figur 2 in einem nachfolgenden Bearbeitungszustand dargestellt, bei dem auf der Textur 6 ein Vorsiegelband 3 aufgebracht und verliersicher mit der Metallverbundfolie 2 verbunden worden ist. Der Fertigungsvorgang dieser Metallverbundfolie 2 wird nachfolgend anhand der Figuren 4 und 5 näher erläutert.

Die Figur 4 zeigt eine mögliche Ausführungsform einer erfindungsgemäßen Formvorrichtung 7 zur Durchführung des erfindungsgemäßen Verfahrens. Die Formvorrichtung 7 besteht aus einer Matrize 8 und einem Blechhalter 9. Die Matrize 8 weist eine Aussparung 10 auf, die entsprechend der Kavität 5 ausgebildet ist, welche nach dem Tiefziehvorgang in der Metallverbundfolie 2 ausgebildet werden soll. Die Metallverbundfolie 2 wird vom Blechhalter 9 in Richtung des Pfeils 11 gegen die Matrize 8 gepresst und somit sicher in ihrer Lage fixiert. Nachdem die Metallverbundfolie 2 auf diese Weise sicher fixiert ist, wird ein Stempel 12 ebenfalls in Richtung des Pfeils 11 nach unten verfahren, sodass die Metallverbundfolie 2 eine Verformung erfährt und innerhalb der Aussparung 10 die gewünschte Kavität 5 ausbildet. Kurz vor Ende des Tiefziehens oder kurz danach wird in einem Teilbereich der Oberfläche der Metallverbundfolie 2 eine Textur 6 eingebracht. Dies geschieht durch Einsätze 13, die an der Unterseite des Blechhalters 9, d. h. an der der Matrize 8 zugewandten Seite, eingesetzt sind und eine Oberfläche aufweisen, welche der Negativform der gewünschten Textur der Metallverbundfolie 2 entspricht. Die Einsätze 13 werden mit Hilfe von Gasdruckfedern unter Erzeugung einer ausreichend großen Betätigungskraft bewegt und gesteuert. Mit der so ausgebildeten Formvorrichtung 7 kann die Metallverbundfolie 2 entweder in einem einzigen Arbeitsschritt oder in zwei unmittelbar aufeinander folgenden bzw. ineinander übergehenden Arbeitsschritten tiefgezogen und mit einer Textur 6 versehen werden. Nachdem dies beides erfolgt ist, kann die so vorbereitete Metallverbundfolie 2 als Pouch der weiteren Verarbeitung zur Herstellung einer Pouchzelle zugeführt werden.

In Figur 5 ist die Formvorrichtung 7 in einem weiteren Bearbeitungszustand dargestellt. Dabei liegt die Metallverbundfolie 2 wiederum in der Aussparung 10 der Matrize 8. Der auf der linken Seite dargestellte Blechhalter 9 ist in einem aufgefahrenen Zustand dargestellt. Aus einem Magazin 14 wird ein Vorsiegelband 3 in Richtung der dargestellten Pfeile zugeführt und gelangen an einem Anschlagmittel, hier Anschlag 15 zur Anlage. Der Anschlag 15 ist in den Blechhalter 9 integriert und fährt in diesen ein, sobald der Blechhalter 9 nach unten gegen die Matrize 8 verfahren wird. Der Anschlag 15 ist so ausgelegt, dass das Vorsiegelband 3 exakt über der Textur 6 angeordnet ist. Anschließend wird der Blechhalter 9, wie auf der rechten Seite der Figur 5 dargestellt, nach unten Verfahren, wobei das Vorsiegelband 3 über die zuvor eingebrachte Textur 6 beispielsweise durch Kleben, Schweißen oder Pressen fest mit der Metallverbundfolie 2 verbunden wird. Auf diese Weise kann eine transportsichere Verbindung des Vorsiegelbandes mit der Metallverbundfolie 2 geschaffen werden.

Gleichzeitig mit dem Zufahren des Blechhalter 9 oder in einem nachfolgenden separaten Arbeitsschritt wird die Metallverbundfolie 2 mittels eines Schneidwerkzeugs 20 exakt auf die gewünschte Kontur zugeschnitten. Für die Ausführung des Schneidwerkzeugs 20 stehen unterschiedliche Ausführungsformen zur Verfügung. So ist auf der linken Seite der Figur eine besonders einfache Ausführungsform mit nur einem Schneidmesser dargestellt. Zum Zuschneiden der Kontur wird dieses Schneidmesser lediglich nach oben bewegt und gelangt dabei an dem als Schneidbacke wirkenden Blechhalter 9 zur Anlage, wobei die Metallverbundfolie Folie 2 zugeschnitten wird. Auf der rechten Seite der Figur ist eine andere mögliche Ausführungsform dargestellt, bei der zwei Bauteile das Schneidwerkzeug 20 bilden. Eines der Bauteile ist im Blechhalter 9 integriert, während das zweite Bauteil in der Matrize 8 angeordnet ist. Die beiden Bauteile sind so positioniert, dass sie bei einem Zufahren des Blechhalters 9 die Metallverbundfolie an ihrem äußeren Rand abscheren und somit für eine maßgenaue Kontur der Metallverbundfolie 2 sorgen. Auch hier wirkt die rechte Seite des Blechhalter 9 beim Zufahren als Schneidbacke.

Die so gefertigte Metallverbundfolie 2 bzw. Pouchfolie kann danach zusammen mit dem Vorsiegelband 3 entnommen und weiterverarbeitet werden. Zur Herstellung einer Pouchzellen können dann zwei solcher bearbeiteten Metallverbundfolien 2 verwendet werden, um einen Zellstapel einschließlich der zugehörigen Ableiterfähnchen und Ableitertab 1 darin anzuordnen. Dabei werden die Ableitertabs so angeordnet, dass sie als Kontakte aus dieser Anordnung herausragen. Anschließend muss diese so geschaffene Pouchzellen nur noch durch Zusammenfügen der Ränder der Metallverbundfolie 2 versiegelt werden, wobei das Vorsiegelband 3 insbesondere an den Austrittsstellen der Ableitertab 1 die Pouchzelle 4 dauerhaft und dicht abschließt.

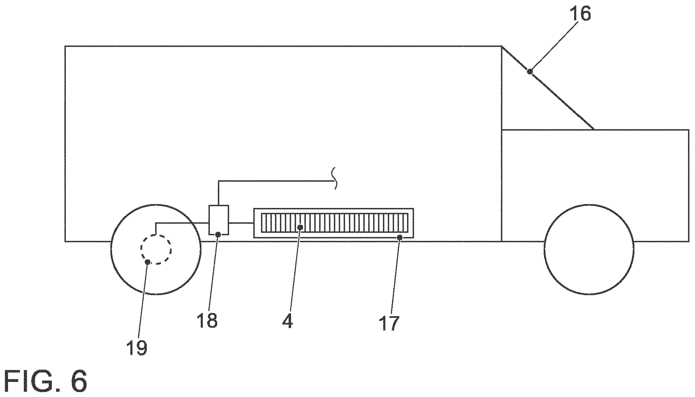

In Figur 6 ist schließlich ein Kraftfahrzeug 16 dargestellt, das mit einer Batterie 17 ausgestattet ist in welcher eine Vielzahl von Pouchzellen 4 angeordnet sind. Die Pouchzellen 4 sind dabei nach dem erfindungsgemäßen Verfahren hergestellt worden. Eine derartige Batterie 17 ist kostengünstig in der Herstellung und weist zudem während des Betriebes eine außerordentlich geringe Wärmeentwicklung auf, da der ohmsche Widerstand innerhalb der Pouchzellen 4 deutlich reduziert ist. Die Verringerung des ohmschen Widerstands kann durch den Einsatz von flächenbasiertem Druckschweißen (Diffusionsschweißen) ermöglicht werden, was vorher durch die Störkontur "Vorsiegelband" nicht möglich war. Die so von der Batterie 17 bereitgestellte Energie kann bei einem so gestalteten Fahrzeug mittels einer Steuerung 18 bedarfsgerecht an einen Elektromotor 19 abgegeben werden, um die jeweils benötigte Antriebsleistung zu erzeugen.

### Bezugszeichenliste

- 1: Ableitertab
- 2: Metallverbundfolie
- 3: Vorsiegelband
- 4: Pouchzelle
- 5: Kavität
- 6: Textur
- 7: Formvorrichtung
- 8: Matrize
- 9: Blechhalter
- 10: Aussparung
- 11: Pfeil
- 12: Stempel
- 13: Einsatz
- 14: Magazin
- 15: Anschlag
- 16: Kraftfahrzeug
- 17: Batterie
- 18: Steuerung
- 19: Elektromotor
- 20: Schneidwerkzeug

## Patentansprüche

1. Verfahren zur Verbindung eines Vorsiegelbandes mit einer Metallverbundfolie (2) für Pouchzellen (4), das wenigsten die folgenden Schritte aufweist:
a) Erzeugen einer Textur (6) in wenigsten einem Teilbereich der Metallverbundfolie (2);
b) Aufbringen eines Vorsiegelbandes (3) auf die Metallverbundfolie (2), wobei die Textur (6) zumindest teilweise von dem Vorsiegelband (3) überdeckt wird;
c) Verbinden des Vorsiegelbandes (3) mit der Metallverbundfolie (2) zu einem Verbund;
d) Zuschneiden des Verbunds auf eine vordefinierte Fertigkontur;
wobei die Metallverbundfolie (2) vor dem Schritt a) in eine Formvorrichtung (7) mit einer Aussparung (10) eingelegt wird; wobei die Textur auf der Metallverbundfolie (2) im Schritt a) durch einen Einsatz im Blechhalter (9) in der Formvorrichtung (7) erzeugt wird.

2. Verfahren nach dem vorhergehenden Anspruch, wobei das Verbinden des Vorsiegelbandes (3) mit der Metallverbundfolie (2) mittels Adhäsion durch die vorher aufgebrachte Textur durchgeführt wird.

3. Verfahren nach einem der vorhergehenden Ansprüche, wobei die Metallverbundfolie (2) vor dem Schritt a) durch Tiefziehen umgeformt wird.

4. Verfahren nach einem der vorhergehenden Ansprüche, wobei die Metallverbundfolie (2) in einem Verfahrensschritt umgeformt wird, währenddessen sie sich innerhalb der Aussparung (10) befindet.

5. Verfahren nach einem der vorhergehenden Ansprüche, wobei als Metallverbundfolie (2) eine Aluminium-Verbundfolie verwendet wird.

6. Verfahren nach einem der vorhergehenden Ansprüche, wobei eine Folienstärke der Metallverbundfolie (2) zwischen 120 µm und 180 µm gewählt wird.

7. Verfahren zur Herstellung einer Pouchzelle (4) mit wenigstens einer Metallverbundfolie (2) mit einem Vorsiegelband (3), die durch ein Verfahren nach einem der vorhergehenden Ansprüche verbunden sind, einem Zellstapel, wenigstens einem Ableitertab und wenigstens einem mit dem Zellstapel verbundenen Ableiterfähnchen mit folgenden Schritten:
A) Verbinden des Ableitertabs mit dem Ableiterfähnchen,
B) Zusammenführen des Ableiters mit dem Zellstapel;
C) Umhüllen des Zellstapels und des Ableitertabs mit der wenigstens einen Metallverbundfolie (2);
D) Versiegeln der Metallverbundfolie (2).

8. Vorrichtung zur Verbindung eines Vorsiegelbandes mit einer Metallverbundfolie (2) für Pouchzellen (4) mit einem Verfahren nach einem der vorhergehenden Ansprüche 1 bis 6, mit einer Matrize, **dadurch gekennzeichnet, dass** die Matrize (8) zu der vorgeformten Metallverbundfolie (2) komplementär ausgebildet ist und die Formvorrichtung (7) mit der Aussparung (10) ausbildet, eine Zuführvorrichtung (14) zur Zuführung von Vorsiegelband (3) zur Matrize (8) und ein Anschlagmittel (15) zur Positionierung des Vorsiegelbands (3) auf der Matrize (8) aufweist, ferner ein Blechhalter (9), der zum Verbinden des Vorsiegelbands (3) mit der Metallverbundfolie (2) ausgebildet ist, und ein Schneidwerkzeug (20 zum Beschneiden der Metallverbundfolie (2) vorgesehen sind.

9. Pouchzelle (4) hergestellt nach dem Verfahren gemäß dem Anspruch 7.

10. Kraftfahrzeug (16) mit wenigstens einer Pouchzelle (4) nach dem vorhergehenden Patentanspruch.

## Claims

1. Method for connecting a pre-sealing tape to a metal composite film (2) for pouch cells (4), comprising at least the following steps:
a) producing a texture (6) in at least one portion of the metal composite foil (2);
b) applying a pre-sealing tape (3) to the metal composite film (2), wherein the texture (6) is at least partially covered by the pre-sealing tape (3);
c) connecting the pre-sealing tape (3) to the metal composite film (2) to form a composite;
d) cutting the composite to a predefined finished contour;
wherein the metal composite foil (2) is placed in a forming device (7) with a recess (10) before step a); wherein the texture on the metal composite foil (2) is produced in step a) by an insert in the sheet holder (9) in the forming device (7).

2. Method according to the preceding claim, wherein the pre-sealing tape (3) is connected to the metal composite foil (2) by means of adhesion through the previously applied texture.

3. Method according to either of the preceding claims, wherein the metal composite foil (2) is formed by deep-drawing before step a).

4. Method according to any of the preceding claims, wherein the metal composite foil (2) is formed in a method step during which it is located within the recess (10).

5. Method according to any of the preceding claims, wherein an aluminum composite foil is used as the metal composite foil (2).

6. Method according to any of the preceding claims, wherein a film thickness of the metal composite film (2) is selected between 120 µm and 180 µm.

7. Method for producing a pouch cell (4) using at least one metal composite foil (2) with a pre-sealing tape (3), which are connected by a method according to any of the preceding claims, a cell stack, at least one arrester tab and at least one arrester lug connected to the cell stack, comprising the following steps:
A) connecting the arrester tab to the arrester lug,
B) joining the arrester to the cell stack;
C) covering the cell stack and the conductor tab with the at least one metal composite foil (2);
D) sealing the metal composite film (2).

8. Device for connecting a pre-sealing tape to a metal composite foil (2) for pouch cells (4) using a method according to any of the preceding claims 1 to 6, having a mold, **characterized in that** the mold (8) is designed to be complementary to the preformed metal composite film (2) and forms the forming device (7) having the recess (10), has a feeding device (14) for feeding pre-sealing tape (3) to the mold (8) and a stop means (15) for positioning the pre-sealing tape (3) on the mold (8), and furthermore a sheet holder (9), which is designed for connecting the pre-sealing tape (3) to the metal composite film (2), and a cutting tool (20) for trimming the metal composite film (2) are provided.

9. Pouch cell (4) manufactured in accordance with the method according to claim 7.

10. Motor vehicle (16) having at least one pouch cell (4) according to the preceding claim.

## Revendications

1. Procédé permettant la liaison d'une bande de préscellement à un film composite métallique (2) pour cellules poches (4) qui présente au moins les étapes suivantes :
a) création d'une texture (6) dans au moins une zone partielle du film composite métallique (2) ;
b) application d'une bande de préscellement (3) sur le film composite métallique (2), dans lequel la texture (6) est au moins partiellement recouverte par la bande de préscellement (3) ;
c) liaison de la bande de préscellement (3) au film composite métallique (2) en un composite ;
d) découpe du composite selon un contour fini prédéfini ;
dans lequel, avant l'étape a), le film composite métallique (2) est inséré dans un dispositif de moulage (7) comportant un évidement (10) ; dans lequel la texture sur le film composite métallique (2) est produite à l'étape a) par une insertion dans le support pour tôle (9) dans le dispositif de moulage (7).

2. Procédé selon la revendication précédente, dans lequel la liaison de la bande de préscellement (3) au film composite métallique (2) est réalisée au moyen d'une adhésion par la texture préalablement appliquée.

3. Procédé selon l'une des revendications précédentes, dans lequel, avant l'étape a), le film composite métallique (2) est déformé par emboutissage.

4. Procédé selon l'une des revendications précédentes, dans lequel le film composite métallique (2) est déformé lors d'une étape de procédé pendant laquelle il se trouve à l'intérieur de l'évidement (10).

5. Procédé selon l'une des revendications précédentes, dans lequel un film composite en aluminium est utilisé comme film composite métallique (2).

6. Procédé selon l'une des revendications précédentes, dans lequel une épaisseur de film du film composite métallique (2) est choisie entre 120 µm et 180 µm.

7. Procédé permettant la fabrication d'une cellule poche (4) comportant au moins un film composite métallique (2) comportant une bande de préscellement (3) qui sont reliés par un procédé selon l'une des revendications précédentes, un empilement de cellules, au moins une tige déflectrice et au moins une patte déflectrice reliée à l'empilement de cellules, comportant les étapes suivantes :
A) liaison de la tige déflectrice à la patte déflectrice,
B) fusion de l'élément déflecteur et de l'empilement de cellules ;
C) enrobage de l'empilement de cellules et de la tige déflectrice au moyen de l'au moins un film composite métallique (2) ;
D) scellement du film composite métallique (2).

8. Dispositif permettant la liaison d'une bande de préscellement à un film composite métallique (2) pour cellules poches (4) au moyen d'un procédé selon l'une des revendications précédentes 1 à 6, comportant une matrice, **caractérisé en ce que** la matrice (8) est réalisée de manière complémentaire au film composite métallique (2) prémoulé et réalise le dispositif de moulage (7) comportant l'évidement (10), présente un dispositif d'alimentation (14) pour l'alimentation d'une bande de préscellement (3) à la matrice (8) et un moyen formant butée (15) pour le positionnement de la bande de préscellement (3) sur la matrice (8), sont en outre prévus un support pour tôle (9) qui est réalisé pour relier la bande de préscellement (3) au film composite métallique (2), et un outil de coupe (20) pour la découpe du film composite métallique (2).

9. Cellule poche (4) fabriquée selon le procédé selon la revendication 7.

10. Véhicule automobile (16) comportant au moins une cellule poche (4) selon la revendication précédente.
